# EUROPÄISCHE PATENTSCHRIFT

(11) **EP 0 876 641 B1**
(45) Veröffentlichungstag und Bekanntmachung des Hinweises auf die Patenterteilung: **18.05.2005**
(21) Anmeldenummer: 97914046.4
(22) Anmeldetag: 09.01.1997
(51) Int. Cl.: G05B 19/418

(54) **VERARBEITUNGSSYSTEM FÜR PROZESSSIGNALE IM PROZESSSYSTEM EINER TECHNISCHEN ANLAGE**
SYSTEM FOR PROCESSING PROCESS SIGNALS IN THE PROCESS SYSTEM OF A TECHNICAL PLANT
SYSTEME DE TRAITEMENT DE SIGNAUX DE PROCESSUS DANS LE SYSTEME DE PROCESSUS D'UNE INSTALLATION TECHNIQUE

(30) Priorität: 22.01.1996 DE 19602120
(43) Veröffentlichungstag der Anmeldung: 11.11.1998
(73) Patentinhaber: SIEMENS AKTIENGESELLSCHAFT, 80333 München (DE)
(72) Erfinder: HAHN, Volker, D-90480 Nürnberg (DE); PFADLER, Heinrich, D-91058 Erlangen (DE)
(86) Internationale Anmeldenummer: PCT/DE1997/000027
(87) Internationale Veröffentlichungsnummer: WO 1997/027523

(56) Entgegenhaltungen:
- EP-A- 0 068 482
- DE-A- 4 226 536

## Beschreibung

Die Erfindung betrifft ein Kraftwerkskennzeichnungssystem als Codiersystem bei einem zentralen Prozeßsystem einer technischen Anlage, insbesondere einer Kraftwerksanlage, und dessen Verwendung. Unter Prozeßsystem wird hierbei ein Prozeßführungs- und/oder Prozeßinformationssystem der technischen Anlage verstanden.

In einer Kraftwerksanlage sollen Prozeßsysteme die aktuellen Betriebszustände der Anlage erkennbar machen und Abweichungen von einem Sollzustand melden. Dazu ist eine umfangreiche Erfassung, Speicherung und Auswertung von die Betriebszustände aller Anlagenteile charakterisierenden Prozeßsignalen erforderlich. Mit zunehmender Energie- und/oder Arbeitsausnutzung derartiger Anlagen und mit zunehmender Steigerung ihres Sicherheitsstandards wachsen auch die Anforderungen an das Prozeßsystem hinsichtlich der Verarbeitung und Speicherung großer Datenmengen.

Jedes Prozeßsignal ist üblicherweise aus einer Anzahl von Informationselementen aufgebaut. Für Analyse- und Diagnosezwecke sowie Störfalluntersuchungen werden die über einen Zeitbereich gespeicherten und in entsprechenden Informationselementen eines jeden Prozeßsignales hinterlegten physikalischen Werte als Zeitkurve und/oder als Verlauf ausgegeben. Damit kann der Betriebszustand der Anlage oder einzelner Anlagenteile zu einem gewählten Zeitpunkt vollständig beschrieben und dargestellt werden.

Um eine derartige Analyse, Diagnose oder Untersuchung einzelner Prozeßsignale durchführen zu können, ist eine Auswahl von Prozeßsignalen anhand projektierter, z.B. fortlaufender, Nummern üblich, die sowohl während einer Planungsphase als auch später beim Betrieb der Anlage verwendet werden. Diese fortlaufenden Nummern stehen jedoch in keinem Zusammenhang mit der Funktion oder der Örtlichkeit der Anlagenteile. Die bisher übliche Auswahl einer Anzahl von Prozeßsignalen aus einer großen Datenmenge anhand der fortlaufenden Nummer ist somit unübersichtlich und zeitaufwendig.

Aus dem Bereich der Energietechnik ist die DIN 40719 Teil 2 bekannt, worin die Bezeichnung von physikalischen Orten und Funktionen von Betriebsmitteln offenbart ist.

Das Gebrauchsmuster G 91 06 762.6 zeigt eine Verwendung der DIN 40719 bei einem Stromlaufplan.

In der EP-A-0 068 482 und der DE-A-42 26 536 sind Verarbeitungssysteme für Prozeßsignale dargestellt, bei welchen Prozeßsignale mittels einer Auswahlmaske selektierbar sind.

Der Erfindung liegt die Aufgabe zugrunde, ein Kraftwerkskennzeichnungssystem anzugeben, das die Auswahl von Prozeßsignalen in besonders einfacher Weise ermöglicht.

Diese Aufgabe wird erfindungsgemäß gelöst durch die Merkmale der unabhängigen Patentansprüche 1 bzw. 4.

Die Erfindung geht dabei von der Überlegung aus, daß als Auswahlkriterium für einzelne Prozeßsignale an Stelle der fortlaufenden Numerierung mindestens ein Informationselement jedes Prozeßsignals herangezogen wird. Dazu sollte dasjenige Informationselement herangezogen werden, das in jedem Prozeßsignal belegt ist, und dessen Inhalt ein bestimmtes Prozeßsignal eindeutig definiert. Diese Kriterien werden gleichzeitig erfüllt von demjenigen Informationselement, das einen aus Codeelementen aufgebauten alphanumerischen Code enthält. Anhand eines aus solchen alphanumerischen Codes aufgebauten Codiersystems ist dann eine schnelle und zuverlässige Auswahl einzelner Prozeßsignale auch aus einer Anzahl von besonders umfangreichen Datenbeständen durchführbar.

Um ohne zusätzliche Mittel gezielt einzelne Prozeßsignale aus dem hinterlegten Datenbestand auswählen zu können, umfaßt die Auswahlmaske mindestens ein Auswahlfeld, das alle Alternativen eines entsprechenden Codeelements des alphanumerischen Codes repräsentiert. Dabei sind in dem Auswahlfeld die Alternativen vorzugsweise in Form des alphanumerischen Codes des Codeelements abgebildet.

Durch Anwahl einer Kombination von Auswahlfeldern und/oder einzelner Alternativen in diesen Auswahlfeldern der Auswahlmaske ist vorteilhafterweise jeder Teilbereich des Datenbestandes auswählbar. Um dabei Eigenschaften, wie z.B. Zeitwerte, des oder jedes Prozeßsignals des selektierten Teilbereiches bestimmen und ausgeben zu können, ist zweckmäßigerweise der Auswahlmaske eine Auswerteeinheit hinterlegt.

Die mit der Erfindung erzielten Vorteile bestehen insbesondere darin, daß durch den Einsatz einer Auswahlmaske in einem Prozeßsystem einer technischen Anlage über das Codiersystem einzelne Prozeßsignale aus dem hinterlegten Datenbestand zuverlässig und schnell auswählbar sind.

Die Erfindung führt weiterhin zur Verwendung des Kraftwerkskennzeichnungssystems nach DIN 40719 Teil 2 zur Identifikation von Prozeßsignalen bei einem zentralen Prozeßsystem einer technischen Anlage.

Ein Ausführungsbeispiel der Erfindung wird anhand einer Zeichnung näher erläutert. Darin zeigen:
- Figur 1: ein Funktionsschema eines Verarbeitungssystems für Prozeßsignale im Prozeßsystem einer technischen Anlage,
- Figur 2: einen Ausschnitt II aus Figur 1 im größeren Maßstab mit Komponenten einer Auswahlmaske.

Einander entsprechende Teile sind in beiden Figuren mit den gleichen Bezugszeichen versehen.

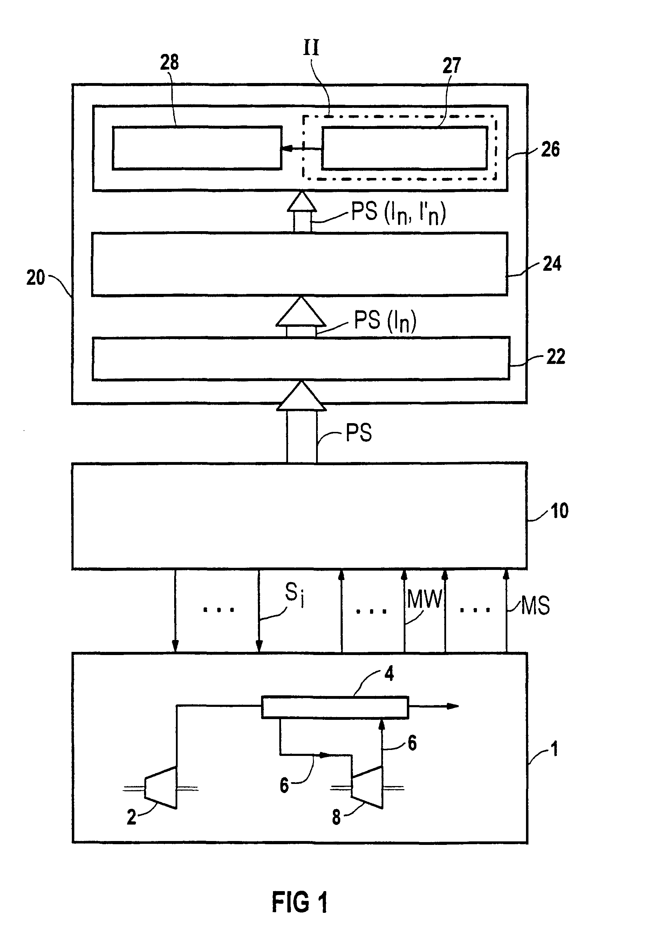

Als technische Anlage ist in Figur 1 schematisch eine Gasund Dampfturbinenanlage 1 dargestellt. Diese umfaßt eine Gasturbine 2 und einen dieser rauchgasseitig nachgeschalteten Abhitzedampferzeuger 4, dessen Heizflächen - in nicht näher dargestellter Art und Weise - in den Wasser-Dampf-Kreislauf 6 einer Dampfturbine 8 geschaltet sind. In der Anlage 1 erfaßte Meßwerte MW sowie von dort abgegebene Meldesignale MS werden einem Automatisierungssystem 10 zugeführt.

In Automatisierungseinheiten des Automatisierungssystems 10 werden einerseits die Meßwerte MW und die Meldesignale MS vorverarbeitet und in Prozeßsignale PS umgewandelt. Zu Steuerzwecken werden andererseits von dort Steuersignale SI an die Anlagenteile oder Komponenten 2, 4, 6, 8 der Gas- und Dampfturbinenanlage 1 abgegeben. Die Prozeßsignale PS werden einem zentralen Prozeßsystem 20 zugeführt. Das Prozeßsystem 20 umfaßt ein Erfassungssystem 22, ein Prozeßdatenarchivierungssystem 24 sowie ein Verarbeitungssystem 26. Das Prozeßsystem 20 kann dabei insbesondere ein Personal Computer oder eine andere Datenverarbeitungseinheit sein.

In dem Erfassungssystem 22 werden jedem Prozeßsignal PS für dieses charakteristische, aus mehreren Prozeßdaten bestehende Informationselemente Iₙ zugeordnet. Das Informationselement I₁ umfaßt Informationen in Form eines alphanumerischen Codes. Der alphanumerische Code ist aus einer Anzahl von Codeelementen aufgebaut. Diese repräsentieren und definieren die Datenbasis bezüglich des zugrundeliegenden Meßwertes MW oder Meldesignales MS, das zugehörige Anlagenteil 2, 4, 6, 8, den Ursprungsort, die Funktion, das Betriebsmittel und/oder die technische Komponente des entsprechenden Anlagenteils 2, 4, 6, 8 oder die Signalart jedes Prozeßsignales PS.

Ein solches aus Codes aufgebautes Codiersystem ist in technischen Anlagen üblich und in der Energietechnik als Kraftwerkskennzeichnungssystem (KKS) nach DIN 40719 Teil 2 bekannt. Das Informationselement I₁ dient somit der Identifikation des Prozeßsignales PS. Das bedeutet, daß jedes Prozeßsignal PS anhand seines alphanumerischen Codes eindeutig auffindbar und beschreibbar ist.

Ein weiteres Informationselement I₂ des Prozeßsignals PS besteht aus einem numerischen Wert, der entweder den physikalischen Wert des zugrundeliegenden Meßwertes MW oder einen Zustand des zugrundeliegenden Meldesignales MS in binärer Form angibt. Der numerische Wert des Informationselementes I₂ kann auch eine Betriebszeit oder ein Schaltspiel repräsentieren, z.B. die Anzahl von Schaltzuständen oder Schaltvorgängen "EIN/AUS" eines bestimmten Anlagenteils 2, 4, 6, 8. Die weiteren Informationselemente I₃, I₄,..., Iₙ können wiederum beliebig definiert sein.

In dem Prozeßdatenarchivierungssystem 24 werden dem Prozeßsignal PS weitere Informationselemente I'ₙ hinzugefügt. Diese zusätzlichen Informationselemente I'ₙ enthalten z.B. Informationen über die Vorgeschichte des Prozeßsignals PS. Mit anderen Worten: Diese zusätzlich hinzugefügten Informationselemente I'ₙ sind durch den zeitlichen Ablauf des Prozesses der Anlage 1, d.h. durch den Anlagenprozeß bestimmt. Die Informationselemente Iₙ und I'ₙ jedes Prozeßsignales PS werden in Systemeinheiten des Prozeßdatenarchivierungssystems 24 abgelegt, z.B. in Prozeßsignal-Datenbanken und/oder in Prozeßinformations-Datenbanken.

Das Verarbeitungssystem 26 für die Prozeßsignale PS im Prozeßsystem 20 umfaßt eine Auswahlmaske 27 und eine Auswerteeinheit 28. Über die Auswahlmaske 27 wird jedes Prozeßsignal PS anhand seines im Informationselement I₁ enthaltenen alphanumerischen Codes aus den Systemeinheiten des Prozeßdatenarchivierungssystems 24 selektiert.

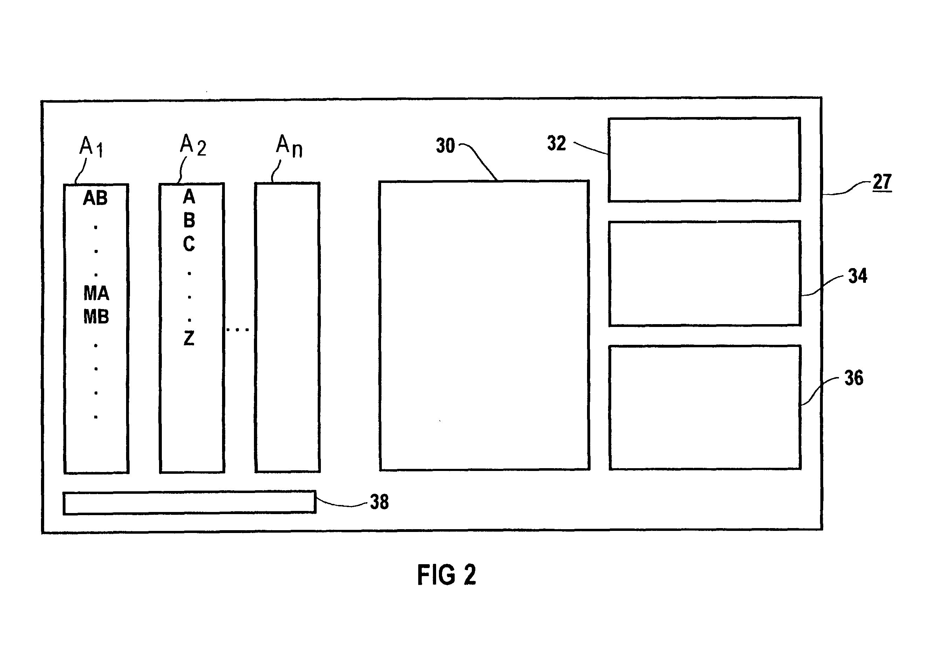

Die Figur 2 zeigt die Auswahlmaske 27 des Verarbeitungssystems 26 für Prozeßsignale PS des Prozeßsystem 20. Dabei umfaßt die Auswahlmaske 27, eine Auswahlbox 30, eine Informationsbox 32, eine Box 34 mit einer Liste der ausgewählten Prozeßsignale PS, eine Ausgabebox 36 und eine Filterbox 38. Die Auswahlmaske 27 enthält außerdem eine Anzahl von Auswahlfeldern Aₙ, von denen jedes ein Codeelement des für alle Prozeßsignale PS gleichartig aufgebauten alphanumerischen Codes repräsentiert.

Um die die verschiedenen Anlagenteile 2, 4, 6, 8 einer technischen Anlage 1 charakterisierenden Prozeßsignale PS auswählen zu können, sind in den Auswahlfeldern A₁, A₂, ... Aₙ alle Alternativen der entsprechenden Codeelemente des alphanumerischen Codes aufgelistet. Dabei repräsentiert das Auswahlfeld A₁ dasjenige Codeelement, das den alphanumerischen Code für die Bezeichnung der Anlagenteile 2, 4, 6, 8 enthält. Die Alternative AB im Auswahlfeld A₁ repräsentiert z.B. eine 420 kV-Netzschaltanlage. Die Alternative MA repräsentiert die Dampfturbine 4, und die Alternative MB repräsentiert die Gasturbine 2.

Das Auswahlfeld A₂ der Auswahlmaske 27 repräsentiert dasjenige Codeelement, das den alphanumerischen Code für die Bezeichnung von Betriebsmitteln enthält. Dabei steht z.B. die Alternative A für Aggregate, die Alternative B für Apparate, die Alternative C für direkte Meßkreise und die Alternative Z für verknüpfte Ursprungssignale. Analog können weitere Alternativen für jedes Codeelement definiert werden.

Durch die Auswahl einer Kombination von einzelnen in den Auswahlfeldern Aₙ aufgelisteten Alternativen ist es somit in besonders einfacher Weise möglich, jeden Teilbereich des die Prozeßsignale PS enthaltenden Datenbestandes auszuwählen. Jedes Prozeßsignal PS dieses ausgewählten Teilbereiches wird in der Auswahlbox 30 in Form seines entsprechenden alphanumerischen Code ausgegeben. Zur Darstellung der Eigenschaften jedes dieser Prozeßsignale PS, d.h. seines Wertes zu einem bestimmten Zeitpunkt, wird in der Auswahlbox 30 das Prozeßsignal PS über dessen alphanumerischen Code ausgewählt. Das ausgewählte Prozeßsignal PS wird dann auch in die Box 34 ausgegeben.

Durch Kombination einer Anzahl von Auswahlkriterien anhand der entsprechenden Codeelemente ist es darüber hinaus möglich, über die Filterbox 38 bestimmte Prozeßsignale PS direkt in die Auswahlbox 30 der Auswahlmaske 27 auszugeben. Gleichzeitig erfolgt in der Informationsbox 32 die Ausgabe von Eigenschaften und Informationen eines einzelnen Prozeßsignales PS, wie z.B. der alphanumerische Code, eine Signalbeschreibung (Klartext) und/oder der physikalische Meßbereich.

Durch die Anwahl der Ausgabebox 36 wird die der Auswahlmaske 27 hinterlegte Auswerteeinheit 28 aktiviert. Die in der Box 34 aufgeführten Prozeßsignale PS und deren Informationselemente Iₙ und I'ₙ werden durch die Auswerteeinheit 28 in Form von Tabellen, Kurvendiagrammen und/oder Balkendiagrammen über einen wählbaren Zeitbereich ausgegeben.

Durch die Selektion des Prozeßsignals PS anhand des alphanumerischen Codes ist eine schnelle und zuverlässige Auswahl auch aus einer Anzahl von besonders umfangreichen Datenbeständen durchführbar. Weiter ist durch die Selektion einzelner Prozeßsignale PS anhand des alphanumerischen Codes und durch die Ausgabe der entsprechenden Informationselemente In, I'ₙ die Verfügbarkeit der Anlagenteile 2, 4 ,6, 8 der technischen Anlage 1, d.h. deren Betriebszustände, zuverlässig darstellbar. Ferner sind Störabläufe einzelner Anlagenteile 2, 4, 6, 8 besonders schnell und sicher darstellbar.

## Patentansprüche

1. Kraftwerkskennzeichnungssystem nach DIN 40719 Teil 2 als Codiersystem bei einem zentralen Prozesssystem (20) zur Verarbeitung von Prozesssignalen (PS) einer technischen Anlage (1), welches ein Erfassungssystem (22) für die Prozesssignale (PS), ein Prozessarchivierungssystem (24), ein Verarbeitungssystem (26) für Prozesssignale (PS), einen im Prozessdatenarchivierungssystem (24) hinterlegten Datenbestand an Prozesssignalen (PS), sowie das im Erfassungssystem (22) implementierte Codiersystem umfasst,
**dadurch gekennzeichnet, dass** das Verarbeitungssystem (26) eine Auswahlmaske (27) zur Selektion der Prozesssignale (PS) sowie eine Auswerteeinheit (28) zur Ausgabe der selektierten Prozesssignale (PS) umfasst und wobei jedem Prozesssignal (PS) durch das Codiersystem Informationselemente (In) zugeordnet werden, welche für das jeweilige Prozesssignal (PS) charakteristisch sind und Informationen in Form eines alphanumerischen Codes umfassen, welcher aus einer Anzahl von Codeelementen aufgebaut ist, und die Prozesssignale (PS) über die Auswahlmaske (27) anhand ihres in den jeweiligen Informationselementen (In) enthaltenen alphanumerischen Codes selektiert werden und wobei die Auswahlmaske (27) Auswahlfelder (An) umfasst, von denen jedes jeweils ein Codeelement repräsentiert.

2. Kraftwerkskennzeichnungssystem nach Anspruch 1,
**dadurch gekennzeichnet, dass** durch eine Auswahl einer Kombination von Codeelementen mittels der Auswahlfelder (Aₙ) ein Teilbereich des hinterlegten Datenbestands ausgewählt wird.

3. Kraftwerkkennzeichnungssystem nach Anspruch 2,
**dadurch gekennzeichnet, dass** mittels der Auswerteeinheit (28) Eigenschaften der Prozesssignale (PS) des Teilbereichs des hinterlegten Datenbestands bestimmt und ausgegeben werden.

4. Verwendung des Kraftwerkskennzeichnungssystems nach DIN 40719 Teil 2 nach einem der Ansprüche 1 bis 3 zur Identifizierung von Prozesssignalen (PS) bei einem zentralen Prozesssystem (20) einer technischen Anlage (1).

## Claims

1. Power station identification system according to DIN 40719 Part 2 as a coding system in a central process system (20) for processing process signals (PS) of a technical plant (1), which comprises an acquisition system (22) for the process signals (PS), a process filing system (24), a processing system (26) for process signals (PS), a data set of process signals (PS) deposited in the process data filing system (24), and the coding system implemented in the acquisition system (22), **characterized in that** the processing system (26) comprises a selection mask (27) for selecting the process signals (PS) and an evaluating unit (28) for outputting the selected process signals (PS) and wherein each process signal (PS) is allocated information elements (Iₙ) by the coding system, which information elements are characteristic of the respective process signal (PS) and comprise information in the form of an alphanumeric code which is composed of a number of code elements, and the process signals (PS) are selected via the selection mask (27) by means of their alphanumeric code contained in the respective information elements (Iₙ), and wherein the selection mask (27) comprises selection fields (Aₙ), each of which in each case represents one code element.

2. Power station identification system according to Claim 1, **characterized in that** a part-area of the deposited data set is selected by selecting a combination of code elements by means of the selection fields (Aₙ).

3. Power station identification system according to Claim 2, **characterized in that** properties of the process signals (PS) of the part-area of the deposited data base are determined and output by means of the evaluating unit (28).

4. Use of the power station identification system according to DIN 40719 Part 2 according to one of Claims 1 to 3 for identifying process signals (PS) in a central process system (20) of a technical plant (1).

## Revendications

1. Système de caractérisation de centrale électrique selon DIN 40719 - 2^{ème} partie comme système de codage dans le cas d'un système de processus central (20) pour le traitement de signaux de processus (PS) d'une installation technique (1), qui comprend un système d'acquisition (22) pour les signaux de processus (PS), un système d'archivage de données de processus (24), un système de traitement (26) pour signaux de processus (PS), un inventaire de données concernant les signaux de processus (PS) et enregistré dans le système d'archivage de données de processus (24) ainsi que le système de codage installé dans le système d'acquisition (22),
**caractérisé par le fait que** le système de traitement (26) comprend un masque de sélection (27) pour la sélection des signaux de processus (PS) ainsi qu'une unité d'évaluation (28) pour la sortie des signaux de processus (PS) sélectionnés, qu'il est associé par le système de codage à chaque signal de processus (PS) des éléments d'information (Iₙ) qui sont caractéristiques du signal de processus (PS) respectif et qui comprennent des informations sous la forme d'un code alphanumérique qui est construit à partir d'éléments de code, que les signaux de processus (PS) sont sélectionnés par l'intermédiaire du masque de sélection (27) à l'aide de leur code alphanumérique contenu dans les éléments d'information (Iₙ) respectifs et que le masque de sélection (27) comprend des champs de sélection (Aₙ), chacun représentant un élément de code à chaque fois.

2. Système de caractérisation de centrale électrique selon la revendication 1,
**caractérisé par le fait qu'**une zone partielle de l'inventaire de données enregistré est sélectionnée par une sélection d'une combinaison d'éléments de code au moyen des champs de sélection (Aₙ).

3. Système de caractérisation de centrale électrique selon la revendication 2,
**caractérisé par le fait que** des propriétés des signaux de processus (PS) de la zone partielle de l'inventaire de données enregistré sont déterminées et délivrées au moyen de l'unité d'évaluation (28).

4. Utilisation du système de caractérisation de centrale électrique selon DIN 40719 - 2^{ème} partie selon l'une des revendications 1 à 3 pour l'identification de signaux de processus (PS) dans le cas d'un système de processus central (20) d'une installation technique (1).
